(19) Europäisches Patentamt

European Patent Office

Office européen des brevets

(11) **EP 1 025 292 B1**

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(51) Int Cl.$^7$: **D01F 2/00**, D01F 2/02, C08J 5/18

(21) Anmeldenummer: **99923303.4**

(22) Anmeldetag: **04.06.1999**

(86) Internationale Anmeldenummer:
**PCT/AT99/00143**

(87) Internationale Veröffentlichungsnummer:
**WO 99/063136 (09.12.1999 Gazette 1999/49)**

(54) **VERFAHREN ZUR HERSTELLUNG CELLULOSISCHER FORMKÖRPER**

METHOD FOR PRODUCING CELLULOSIC SHAPED BODIES

PROCEDE DE PRODUCTION DE CORPS MOULES CELLULOSIQUES

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **04.06.1998 AT 95798**

(43) Veröffentlichungstag der Anmeldung:
**09.08.2000 Patentblatt 2000/32**

(73) Patentinhaber: **LENZING AKTIENGESELLSCHAFT**
**4860 Lenzing (AT)**

(72) Erfinder:
• **GSPALTL, Peter**
  **A-8071 Grambach (AT)**
• **SCHLOSSNIKL, Christian**
  **A-4840 Vöcklabruck (AT)**

• **KALLEITNER, Johann**
  **A-4861 Schörfling (AT)**
• **FIRGO, Heinrich**
  **A-4840 Vöcklabruck (AT)**

(74) Vertreter: **Schwarz, Albin, Dr.**
**Kopecky & Schwarz**
**Patentanwälte**
**Wipplingerstrasse 32/22**
**1010 Wien (AT)**

(56) Entgegenhaltungen:
**WO-A-95/07811          WO-A-96/17118**
**DE-A- 4 421 482**

• **MYEONG-JIN HAN UND D. BHATTACHARYYA: "Changes in Morphology ..." JOURNAL OF MEMBRANE SCIENCE, Bd. 98, Nr. 3, 1995, Seiten 191-200, XP000054119**

**Beschreibung**

Die Erfindung betrifft ein Verfahren zur Herstellung von cellulosischen Formkörpern in Form von Flachfolien sowie cellulosischen Membranen in Form von Flachfolien, wobei eine Lösung von Cellulose in einem wässerigen tertiären Aminoxid, welche Lösung gegebenenfalls noch Zusätze wie Stabilisatoren, Weichmacher, Porenbilder u.dgl. enthalten kann, mittels einer Extrusionsdüse extrudiert wird, wobei eine geformte Lösung entsteht, welche zwei Oberflächen besitzt, und die extrudierte geformte Lösung über einen Spalt in ein Fällbad geführt und aus dem Fällbad abgezogen wird.

Verfahren zur Herstellung von cellulosischen Formkörpern aus Lösungen der Cellulose in einem wässerigen tertiären Aminoxid sind bekannt und werden z. B. in der US-A 4,246,221 sowie der PCT-WO 93/19230 beschrieben. Dieses bekannte Verfahren wird im folgenden als "Aminoxidverfahren" bezeichnet.

Bei cellulosischen Folien ist die Porenstruktur der Folie eine wesentliche Eigenschaft. Sie hat einen wesentlichen Einfluß auf die Eignung der Folie für verschiedenste Anwendungszwecke, wie z.B. als Verpackungsfolie oder für den Einsatz als Membran.

Insbesondere Flachfolien aus Cellulose, die eine asymmetrische Struktur aufweisen, sind für atmungsaktive Verpackungsfolien und für den Einsatz als Membranen bei druckbetriebenen Trennverfahren wie Ultrafiltration, Nanofiltration und Umkehrosmose geeignet. Sie zeichnen sich dadurch aus, daß sie aus einer grobporigen Schicht und einer dünnen feinporigen bzw. dichten Haut bestehen. Beim Einsatz als Membran übernimmt die grobporige Schicht eine Stützfunktion, während die eigentliche Trennwirkung über die dünne feinporige Schicht erfolgt. Durch die vergleichsweise geringe Dicke dieser Schicht resultiert eine hohe Permeabilität der Folien bei gleichzeitig hohen Festigkeiten.

Die nach bekannten Verfahren wie dem Viscoseverfahren, dem Cuoxamverfahren oder neuerdings dem Aminoxidverfahren hergestellten cellulosischen Flach oder Schlauchfolien weisen im Normalfall nicht die oben genannte asymmetrische Struktur auf.

So beschreibt die US-A 4,354,938 ein Verfahren für die Herstellung von Schlauchfolien für den Einsatz als Dialysemembranen nach dem Viscoseverfahren, bei dem eine schlauchförmig ausgeformte Folie vor dem Trocknen in Querrichtung durch Aufblasen mit Luft um zwischen 40 % und 120 % verstreckt wird, was zu einer Membran mit einer in Längs- und Querrichtung gleichmäßigen Orientierung führt. Beim Überführen der getrockneten Membranen in den nassen Zustand unterliegen die so dargestellten Membranen einem Schrumpf in Längs- und Querrichtung von 0,5 - 10 %.

Es wird jedoch in diesem Dokument nichts über eine asymmetrische Struktur der Folie berichtet.

Die WO 96/20301 beschreibt ein Verfahren zur Herstellung cellulosischer Formkörper, welches dadurch gekennzeichnet ist, daß eine Lösung, enthaltend in Aminoxiden gelöste Cellulose, in einer Düse geformt wird und die geformte Lösung nach einer Luftstrecke nacheinander durch mindestens zwei Fällmedien geführt wird, wobei als wesentlicher Punkt angeführt wird, daß zumindest im ersten Fällmedium eine langsamere Koagulation der Cellulose gegenüber dem letzten Fällmedium erfolgt. Als Fällmedien werden dabei Lösungsmittel verwendet, die untereinander nicht mischbar sind und aufgrund ihrer Dichteunterschiede übereinander geschichtet werden können.

Die so dargestellten Formkörper weisen, auf ihren Querschnitt bezogen, einen inneren Bereich mit einer hohen übermolekularen Ordnung in Form kleindisperser Poren auf, während ein den inneren Bereich umgebender äußerer Bereich eine geringe übermolekulare Ordnung mit gegenüber dem inneren Bereich größeren heterogenen Hohlräumen aufweist. Bei Einsatz der Formkörper als Membran z.B. in Form von Hohlfasern oder Flachmembranen erfüllt der äußere grobdisperse Bereich die Funktion einer Stützschicht, während der feindisperse Innenbereich die eigentliche Trennung bewirkt. Aufgrund der vergleichsweise geringen Dicke des inneren Bereichs resultiert eine hohe Permeabilität des Formkörpers.

Folien mit einem feinporigen Kern und grobdispersen Außenschichten eignen sich jedoch nur schlecht für Trennverfahren wie Ultrafiltration und Umkehrosmose, da es in diesem Fall sehr rasch zu einer Verstopfung der Poren auf der Feedseite kommen kann. Es ist bei diesen Prozessen üblich, eine asymmetrische Membran bestehend aus einer dichten Haut und einem grobporigen Korpus zu verwenden, wobei die dichte Haut immer der Feedseite zugewandt ist. Durch einen entsprechenden Cross-Flow wird bei diesen druckbetriebenen Verfahren die Ausbildung einer Konzentrationspolarisation und damit einer Gelschicht auf der Membranoberfläche minimiert, wodurch sich der Fluß durch die Membran über lange Zeit auf hohem Niveau halten läßt. Im Fall, daß die der Feedseite zugewandte Außenschicht der Membran eine gröbere Struktur aufweist als der Kern, ist ein Cross-Flow nicht wirksam. Die abzutrennenden Partikel können nicht von der Membranoberfläche wegtransportiert werden und verstopfen die Poren.

Es ist bekannt, beim Aminoxidverfahren den NMMO-Gehalt des Fällbades während des Prozesses konstant zu halten, was in der Praxis durch permanente Zufuhr einer entsprechenden Menge frischen Fällungsmittels bzw. Waschwassers erfolgt. Dies erscheint bei dem beschriebenen Verfahren durch die Verwendung verschiedener Fällungsmedien, sowie deren Übereinanderschichtung nur schwer möglich bzw. sehr kompliziert.

Die DE 44 21 482 C2 beschreibt ein Verfahren zur Herstellung von orientierten asymmetrischen Cellulosefolien durch Verspinnen von in Aminoxiden gelöster nicht derivatisierter Cellulose über eine Ringdüse in ein Fällbad, wobei die Folie durch ein Treibgas aufgeblasen wird. Die asymmetrische Struktur wird dadurch erreicht, daß der extrudierte Schlauch an der Innen- und Außenseite durch unterschiedliche Fällmedien ausgefällt wird. Dadurch ergibt sich ein unterschiedlicher Ablauf der Koagulation an der Innen- und Außenseite, was zur asymmetrischen Struktur der Folien führt.

Die Verwendung unterschiedlicher Fällmedien ist jedoch immer mit einem erheblichen Aufwand verbunden, insbesondere wenn andere Fällmedien als Wasser eingesetzt werden oder den Fällmedien Zusätze beigefügt werden müssen.

Die EP 0 042 517 B1 beschreibt ein Verfahren zur Herstellung von Dialysemembranen aus regenerierter Cellulose in Form von Flachfolien, Schlauchfolien und Hohlfäden, bei dem ein Gemisch von ganz oder teilweise substituierter Cellulose, tertiärem Aminoxid und gegebenenfalls bis zu 25 Gewichtsprozent eines die Cellulose nicht lösenden Verdünnungsmittels und bis zu 10 Gewichtsprozent üblicher Zusätze in einem Doppelschneckenextruder in weniger als 8 min bei Temperaturen zw. 80- und 150 °C in Lösung gebracht wird, die Lösung durch ein entsprechendes Formwerkzeug in ein Fällbad extrudiert wird und der koagulierte Formkörper nach Waschen und Behandlung mit Glycerin unter Schrumpfbehinderung getrocknet wird. Die beschriebenen Dialysemembranen weisen eine hohe dialytische Permeabilität im mittelmolekularen Bereich auf, die auch dann im wesentlichen erhalten bleibt, wenn durch eine Nachbehandlung die hydraulische Permeabilität für Wasser drastisch gesenkt wird. Durchgeführt wird diese Nachbehandlung, indem die Membran vor dem Trocknen in wasserhaltigen Flüssigkeiten für einige Zeit einer erhöhten Temperatur ausgesetzt wird.

Eine asymmetrische Struktur der hergestellten Produkte wird jedoch nicht beschrieben.

In der EP 0 807 460 A1 wird ein Verfahren zur Herstellung von cellulosischen Dialysemembranen in Form von Flach- Schlauch- oder Hohlfasermembranen durch Verspinnen einer Lösung von Cellulose und/oder modifizierter Cellulose in einem wäßrigen tertiären Aminoxid sowie weiteren Zusätzen wie Stabilisatoren, Porenbildnern u. dgl. beschrieben, wobei die Abzugsgeschwindigkeit mindestens 30 m/min beträgt und nach dem Membranen für den high-, middle- und low flux Bereich hergestellt werden können. Die gezielte Beeinflussung der Porenstruktur der Membranen wird in diesem Verfahren vor allem durch Verwendung von substituierter Cellulose bzw. den Zusatz von diversen Additiva und durch eine Nachbehandlung erreicht und dadurch aufwendig.

Die Herstellung von asymmetrischen Membranen nach diesem Verfahren wird jedoch nicht beschrieben.

Es ist eine Aufgabe der vorliegenden Erfindung, ein Verfahren zur Verfügung zu stellen, mit welchem die Porenstruktur von nach dem Aminoxidverfahren hergestellten Folien bzw. Membranen gezielt beeinflußt werden kann. Insbesondere ist es Aufgabe der Erfindung, ein Verfahren zur Verfügung zu stellen, mit welchem Folien bzw. Membranen mit einer asymmetrischen Struktur erhalten werden können.

Diese Aufgabe wird durch ein Verfahren der eingangs beschriebenen Art gelöst, welches dadurch gekennzeichnet ist, daß die zwei Oberflächen der geformten Lösung im Spalt jeweils zumindest einem gasförmigen Medium ausgesetzt werden, wobei sich das Medium, dem die erste Oberfläche ausgesetzt ist, von dem Medium, dem die zweite Oberfläche ausgesetzt ist, in Zusammensetzung, Eigenschaften und/oder Bewegungszustand unterscheidet.

Als die "Oberflächen" der geformten Lösung sind in diesem Zusammenhang bei der Extrusion durch eine längliche Extrusionsdüse die zwei Oberflächen der gebildeten flach geformten Lösung zu verstehen.

Als "Spalt" ist - wie an sich im Aminoxidverfahren bekannt - der Spalt zwischen der Extrusionsdüse und Fällbad zu verstehen, durch welchen die geformte Lösung geführt wird. Dieser Spalt besteht aus einem gasförmigen Medium, welches zumeist in bezug auf die geformte Lösung inert ist, d.h. die Cellulose nicht ausfällt. Als gasförmige Medien sind Luft, Stickstoff und andere Gase geeignet. Für die Zwecke der vorliegenden Erfindung umfaßt der Begriff "gasförmiges Medium" aber auch Mischungen aus Gasen und Flüssigkeiten, z. B. mit Wasserdampf angereicherte oder gesättigte Luft bzw. Aerosole.

Die gasförmigen Medien, denen die zwei Oberflächen der geformten Lösung ausgesetzt sind, können sich in ihrer Zusammensetzung und/oder ihren Eigenschaften und/oder ihrem Bewegungszustand unterscheiden.

In bezug auf den Begriff "Zusammensetzung" kommen Unterschiede des Mediums selbst (z.B. Luft oder Sauerstoff bei der einen Oberfläche der Lösung, Stickstoff bei der anderen Oberfläche der Lösung), unterschiedliche Gasmischungen auf den beiden Oberflächen der Folie sowie z.B. unterschiedliche Feuchtigkeitsgehalte in Frage. Unter den Begriff "Feuchtigkeitsgehalt" fällt für die Zwecke der vorliegenden Erfindung dabei nicht nur der Gehalt an Wasser, sondern auch der Gehalt einer sonstigen Flüssigkeit, z.B. eines Alkohols, im gasförmigen Medium.

Als Eigenschaft, in der sich die gasförmigen Medien unterscheiden können, ist insbesondere die Temperatur zu nennen.

Unterschiedliche Bewegungszustände der gasförmigen Medien werden dann erzielt, wenn z.B. die gasförmigen Medien den Oberflächen mit jeweils unterschiedlichen Geschwindigkeiten oder in unterschiedlicher Menge zugeführt werden.

Im folgenden wird die erfindungsgemäße Maßnahme, die zwei Oberflächen der geformten Lösung in bezug auf die angegebenen Parameter unterschiedlichen gasförmigen Medien auszusetzen, als "ungleichmäßige Behandlung" bezeichnet.

Es hat sich gezeigt, daß eine ungleichmäßige Behandlung der Oberflächen der geformten Lösung zu Formkörpem wie Folien bzw. Membranen führt, welche an den beiden Oberflächen der Folie bzw. Membran unterschiedliche Porenstrukturen aufweisen.

Dies ist insofern überraschend, als dieses Ergebnis mit relativ geringen Mitteln erzielt werden kann. Aus dem Stand der Technik in bezug auf asymmetrische Folien sind hingegen nur aufwendigere Maßnahmen, wie z.B. das Vorsehen von unterschiedlichen Fällungsmedien für die Innen- bzw. Außenseite einer schlauchförmig extrudierten Lösung, bekannt.

Für die Herstellung von Flachfolien, wo das Vorsehen unterschiedlicher Fällungsmedien für die zwei Oberflächen technisch nur sehr schwer realisierbar wäre, bietet das erfindungsgemäße Verfahren eine wirtschaftlich günstige und effiziente Problemlösung.

Bevorzugt unterscheiden sich die gasförmigen Medien sich in ihrer Temperatur und/oder ihrem Feuchtigkeitsgehalt.

In einer weiteren bevorzugten Ausführungsform des erfindungsgemäßen Verfahrens wird die geformte Lösung an zumindest einer Oberfläche einer Strömung des gasförmigen Mediums ausgesetzt.

Die Zufuhr eines Stromes eines gasförmigen Mediums, z.B. Luft, zur geformten Lösung ist dabei aus dem Stand der Technik, z.B. aus der PCT-WO 93/19230 oder der PCT-WO 95/07811 an sich bekannt.

Das gasförmige Medium kann der geformten Lösung im wesentlichen im rechten Winkel zur Extrusionsrichtung zugeführt werden. Es ist aber auch möglich, das gasförmige Medium entlang der geformten Lösung fließen zu lassen und/oder abzusaugen. Alle diese Fälle sollen im folgenden mit dem Begriff "Beblasung" umschrieben werden.

Die geformte Lösung kann an beiden Oberflächen Strömungen von gasförmigen Medien ausgesetzt werden. In diesem Fall wird der erfindungsgemäße Effekt erreicht, wenn sich die Medien in ihrer Zusammensetzung, ihren Eigenschaften und/oder der Menge oder Geschwindigkeit, mit welcher sie zugeführt werden, unterscheiden.

Bevorzugt wird die geformte Lösung an nur einer Oberfläche einer Strömung eines gasförmigen Mediums ausgesetzt. Diese Ausführungsform, welche insbesondere bei der Herstellung von cellulosischen Flachfolien günstig ist, wird im folgenden als "einseitige Beblasung" bezeichnet.

Durch eine solche einseitige Beblasung lassen sich in besonders effizienter Weise Folien bzw. Membranen mit einer asymmetrischen Porenstruktur herstellen. Weiters kann durch eine Variation der Beblasungsbedingungen das Ausmaß der Asymmetrie gezielt beeinflußt werden.

In diesem Zusammenhang erweist es sich als besonders günstig, wenn das gasförmige Medium, mit welchem die erste Oberfläche der geformten Lösung beblasen wird, eine andere Zusammensetzung und/oder Eigenschaften aufweist als das gasförmige Medium, dem die zweite Oberfläche der geformten Lösung ausgesetzt ist.

So ist es z.B. möglich, eine Oberfläche der geformten Lösung einem im wesentlichen ruhenden gasförmigen Medium, z.B. konditionierter Luft auszusetzen, während die andere Oberfläche mit Luft mit erhöhtem Feuchtigkeitsgehalt und/oder erhöhter Temperatur beblasen wird.

Dabei zeigt sich insbesondere, daß eine Beblasung mit trockener Luft bei tieferer Temperatur zu einer dichten Struktur der beblasenen Oberfläche führt, während bei sonst gleichen Bedingungen eine Beblasung mit erwärmter Luft mit erhöhtem Feuchtigkeitsgehalt (z.B. gesättigter Wasserdampf) zu höheren Porositäten führt.

Als gasförmige Medien eignen sich für das erfindungsgemäße Verfahren insbesondere Luft, Stickstoff oder der Dampf eines anderen Lösungsmittels, z. B. Methanol.

Wird als gasförmiges Medium Luft eingesetzt, so kann die Feuchtigkeit der Luft im Bereich von 0% bis 100% liegen.

Die Temperaturen der gasförmigen Medien liegen im Bereich von -20°C bis +120°C.

Die extrudierte Lösung kann im Luftspalt in an sich bekannter Weise verstreckt werden, indem die Geschwindigkeit des Abzuges der Lösung höher eingestellt wird als die Extrusionsgeschwindigkeit. Es ist auch möglich, die extrudierte Lösung nicht zu verstrecken oder mit einer Geschwindigkeit abzuziehen, welche geringer als die Extrusionsgeschwindigkeit ist.

Die extrudierte Lösung bzw. der ausgefällte Formkörper kann auch einer Verstreckung quer zur Extrusionsrichtung unterzogen werden. Diese Querverstreckung kann im Luftspalt, nach dem Eintritt in das Fällbad, während des Auswaschens oder auch nach dem Trocknen unter Wiederbefeuchtung durchgeführt werden.

Wird die Lösung durch eine Extrusionsdüse mit länglichem Extrusionsspalt extrudiert, resultieren cellulosische Flachfolien als Produkt.

Mit dem erfindungsgemäßen Verfahren sind cellulosische Folien bzw. Membranen mit einer an den beiden Oberflächen der Folie bzw. Membran unterschiedlichen Porenstruktur erhältlich. Diese Produkte eignen sich hervorragend für verschiedene Anwendungsbereiche, z.B. im Verpackungsbereich oder in der Membrantechnologie.

Die Erfindung wird im folgenden durch Beispiele näher beschrieben:

Die in den Beispielen angegebene Ultrafiltrationsrate ist definiert als das pro Zeiteinheit durch die Membranwand durchtretende Permeatvolumen bezogen auf die Membranfläche und den Prüfdruck.

$$UFR = \frac{V}{t.A.p} \quad \frac{ml}{h.m^2.mmHg}$$

V = Flüssigkeitsvolumen (Permeat) [ml]
t = Zeit [h]
A = Membranfläche [m²]
p = Prüfdruck [mm Hg]

Die angegebenen diffusen Permeabilitäten ergeben sich durch Auftragen von $\ln(c_t/c_0)$ gegen die Zeit aus der Steigung der Geraden.

$$\ln = \frac{c_t}{c_0} - \frac{A}{V} P_{diff}.t$$

$c_o$ = Anfangskonzentration
$c_t$ = Konzentration zur Zeit t
A = Membranfläche [cm²]
V = Dialysevolumen [cm³]
$P_{diff.}$ = diffuse Permeabilität [cm/min]
t = Zeit [min]

Vergleichs beispiel 1

Eine Celluloselösung mit einer Temperatur von 95 °C enthaltend 15,0 Masse% Cellulose, 74,5 Masse% NMMO und 10,5 Masse % Wasser wurde mittels einer Flachdüse, welche einen Extrusionsspalt von 40 cm Länge und eine Breite von 300 μm aufwies, mit einem Durchsatz von 37,8 kg/h durch einen Luftspalt von 20 mm in ein Fällbad bestehend aus 80 Masse% NMMO und 20 Masse% Wasser extrudiert.

Die als Flachfolie ausgeformte Celluloselösung trat aus der Düse mit einer Austrittsgeschwindigkeit von 4,2 m/min aus und wurde mit der gleichen Geschwindigkeit abgezogen. Dies bedeutet, daß die Flachfolie im Luftspalt nicht in Längsrichtung verstreckt wurde:

Die Folie wurde gewaschen, durch ein Bad mit 150 g/l Glycerin als Weichmacher geführt und anschließend unter Schrumpfbehinderung getrocknet.

Es wurden folgende Membraneigenschaften gefunden:

| | |
|---|---|
| Dicke trocken (μm) | 97 |
| UFR-Wasser (ml/h.m².mm Hg) | 5,67 |
| $P_{diff}$ NaCl (cm/min) | $4,1.10^{-3}$ |
| $P_{diff}$ NaOH (cm/min) | $5,3.10^{-3}$ |

Beispiel 2

Es wurde wie in Beispiel 1 vorgegangen nur wurde eine Oberfläche der als Flachfolie ausgeformten Lösung 10 mm nach dem Düsenaustritt durch Flachstrahldüsen mit 47m3/h Luft (rel. Feuchte 50%, 20 °C) über die gesamte Breite beblasen.

Es wurden folgende Membraneigenschaften gefunden:

| | |
|---|---|
| Dicke trocken (μm) | 98 |
| UFR-Wasser (ml/h.m².mm Hg) | 9,43 |
| $P_{diff}$ NaCl (cm/min) | $5,8.10^{-3}$ |
| $P_{diff}$ NaOH (cm/min) | $1,3.10^{-2}$ |

Das Beispiel zeigt, daß die einseitige Beblasung zu einer Erhöhung der Porosität der beblasenen Oberfläche führt, was sich in den im Vergleich zu Beispiel 1 erhöhten Permeabilitäten widerspiegelt

Vergleichs beispiel 3

Es wurde wie in Beispiel 1 vorgegangen, nur wurde die als Flachfolie ausgeformte Lösung mit dem 3fachen ihrer Austrittsgeschwindigkeit abgezogen.

Es wurden folgende Membraneigenschaften gefunden:

| | |
|---|---|
| Dicke trocken (μm) | 25 |
| UFR-Wasser (ml/h.m².mm Hg) | 4,82 |
| $P_{diff}$ NaCl (cm/min) | $2,3.10^{-3}$ |
| $P_{diff}$NaOH (cm/min) | $6,62.10^{-3}$ |

Beispiel 4

Es wurde wie in Beispiel 3 vorgegangen, nur wurde eine Oberfläche der als Flachfolie ausgeformten Lösung 10 mm nach dem Düsenaustritt durch Flachstrahldüsen mit 47 m3/h mit Luft bei 100°C und 100 % Feuchtigkeit über die gesamte Breite beblasen.

Es wurden folgende Membraneigenschaften gefunden:

| | |
|---|---|
| Dicke trocken (μm) | 27 |
| UFR-Wasser (ml/h.m².mm Hg) | 12,02 |
| $P_{diff}$ NaCl (cm/min) | $6,2.10^{-3}$ |
| $P_{diff}$ NaOH (cm/min) | $1,0.10^{-2}$ |

Das Beispiel zeigt, daß die einseitige Beblasung zu einer Erhöhung der Porosität der beblasenen Oberfläche führt, was sich in den im Vergleich zu Beispiel 3 erhöhten Permeabilitäten widerspiegelt.

**Patentansprüche**

1. Verfahren zur Herstellung von cellulosischen Formkörpern in Form von Flachfolien sowie cellulosischen Membranen in Form von Flachfolien wobei eine Lösung von Cellulose in einem wässerigen tertiären Aminoxid, welche Lösung gegebenenfalls noch Zusätze enthalten kann, mittels einer Extrusionsdüse extrudiert wird, wobei eine geformte Lösung entsteht, welche zwei Oberflächen besitzt, und die extrudierte geformte Lösung über einen Spalt in ein Fällbad gerührt und aus dem Fällbad abgezogen wird, **dadurch gekennzeichnet, daß** die zwei Oberflächen der geformten Lösung im Spalt jeweils zumindest einem gasförmigen Medium ausgesetzt werden, wobei sich das Medium, dem die erste Oberfläche ausgesetzt ist, von dem Medium, dem die zweite Oberfläche ausgesetzt ist, in Zusammensetzung, Eigenschaften und/oder Bewegungszustand unterscheidet.

2. Verfahren nach Anspruch 1, **dadurch gekennzeichnet, daß** die gasförmigen Medien sich in ihrer Temperatur und/oder ihrem Feuchtigkeitsgehalt unterscheiden.

3. Verfahren nach Anspruch 1 oder 2, **dadurch gekennzeichnet, daß** die geformte Lösung an zumindest einer Oberfläche einer Strömung des gasförmigen Mediums ausgesetzt wird.

4. Verfahren nach Anspruch 3, **dadurch gekennzeichnet, daß** die geformte Lösung an beiden Oberflächen Strömungen von gasförmigen Medien ausgesetzt wird.

5. Verfahren nach Anspruch 3, **dadurch gekennzeichnet, daß** die geformte Lösung an nur einer Oberfläche einer Strömung eines gasförmigen Mediums ausgesetzt wird.

6. Folie bzw. Membran mit einer an den beiden Oberflächen der Folie bzw. Membran unterschiedlichen Porenstruktur, erhältlich durch ein Verfahren gemäß einem der Ansprüche 1 bis 5.

**Claims**

1. A process for producing cellulosic moulded bodies in the form of flat films as well as cellulosic membranes in the form of flat films, with a solution of cellulose in an aqueous tertiary amine oxide, which solution optionally may contain additives, being extruded by means of an extrusion die, whereby a formed solution having two surfaces is generated, and the extruded formed solution is conducted via a gap into a precipitation bath and is withdrawn from said precipitation bath, **characterized in that** the two surfaces of the formed solution are each exposed to at least one gaseous medium in the gap, whereby the medium to which the first surface is exposed differs from the medium to which the second surface is exposed in terms of its composition, properties and/or state of motion.

2. A process according to claim 1, **characterized in that** the gaseous media differ in terms of their temperature and/or moisture content.

3. A process according to claim 1 or 2, **characterized in that**, at one surface at least, the formed solution is exposed to a flow of the gaseous medium.

4. A process according to claim 3, **characterized in that** the formed solution is exposed to flows of gaseous media at both surfaces.

5. A process according to claim 3, **characterized in that** the formed solution is exposed to a flow of a gaseous medium at only one surface.

6. A film or a membrane, respectively, having a pore structure that is different at the two surfaces of the film or membrane, respectively, obtainable by means of a process according to any of claims 1 to 5.

**Revendications**

1. Procédé de fabrication de corps moulés cellulosiques ayant la forme de feuilles plates, ainsi que de membranes cellulosiques ayant la forme de feuilles plates, une solution de cellulose dans un aminoxyde tertiaire aqueux, cette solution le cas échéant pouvant contenir encore des additifs, étant extrudée à l'aide d'une buse d'extrusion, une solution formée étant produite ayant deux surfaces, et la solution formée extrudée étant guidée par un interstice dans un bain de précipitation et extraite du bain de précipitation, **caractérisé en ce que** les deux surfaces de la solution formée dans l'interstice sont chacune exposées au moins à un milieu gazeux, le milieu auquel est exposée la première surface se distinguant du milieu auquel est exposée la deuxième surface, par la composition, les propriétés et/ou l'état cinématique.

2. Procédé selon la revendication 1, **caractérisé en ce que** les milieux gazeux se distinguent par leur température et/ou leur teneur en humidité.

3. Procédé selon la revendication 1 ou 2, **caractérisé en ce que** la solution formée est exposée, au moins sur une surface, à un écoulement du milieu gazeux.

4. Procédé selon la revendication 3, **caractérisé en ce que** la solution formée est exposée, sur les deux surfaces, à des écoulements de milieux gazeux.

5. Procédé selon la revendication 3, **caractérisé en ce que** la solution formée est exposée, sur une seule surface, à un écoulement d'un milieu gazeux.

**6.** Feuille et/ou membrane ayant une structure poreuse différente sur les deux surfaces de la feuille ou de la membrane, obtenue par un procédé selon l'une des revendications 1 à 5.